# EUROPÄISCHE PATENTSCHRIFT

(11) **EP 4 110 581 B1**
(45) Veröffentlichungstag und Bekanntmachung des Hinweises auf die Patenterteilung: **06.09.2023**
(21) Anmeldenummer: 22709223.6
(22) Anmeldetag: 09.02.2022
(51) Int. Cl.: B29C 45/76, B29C 45/42, B29C 45/17, F16H 7/08, F16H 7/12

(54) **VORRICHTUNG UND VERFAHREN ZUR ÜBERWACHUNG UND EINSTELLUNG EINER RIEMENSPANNUNG**
APPARATUS AND METHOD FOR MONITORING AND ADJUSTING A BELT TENSION
APPAREIL ET PROCÉDÉ DE SURVEILLANCE ET DE RÉGLAGE D'UNE TENSION DE COURROIE

(30) Priorität: 10.02.2021 DE 102021103078
(43) Veröffentlichungstag der Anmeldung: 04.01.2023
(73) Patentinhaber: Arburg GmbH + Co KG, 72290 Loßburg (DE)
(72) Erfinder: BLETSCHER, Rainer, 72270 Baiersbronn (DE); FAULHABER, Werner, 72290 Loßburg Wittendorf (DE)
(74) Vertreter: RPK Patentanwälte Reinhardt und Kaufmann Partnerschaft mbB
(86) Internationale Anmeldenummer: PCT/EP2022/053158
(87) Internationale Veröffentlichungsnummer: WO 2022/171692

(56) Entgegenhaltungen:
- US-A- 4 968 214

## Beschreibung

Die Erfindung betrifft eine Vorrichtung, eingerichtet zur Einstellung und Überwachung einer Riemenspannung und/oder einer Riemensteifigkeit eines Riemens einer Spritzgießanlage zur Verarbeitung von Kunststoffen und anderer plastifizierbarer Massen und/oder deren Peripherie, nach dem Oberbegriff des Anspruchs 1 sowie ein Verfahren zur Überwachung und Einstellung einer Riemenspannung und/oder einer Riemensteifigkeit eines Riemens einer Spritzgießanlage und/oder deren Peripherie, nach dem Oberbegriff des Anspruchs 9.

Heutzutage werden insbesondere im Bereich der Spritzgießtechnik schwerkraftbelastete Achsen, wie z.B. Tauchachsen mit einem Riemen betätigt, beispielsweise bei der Entnahme eines Spritzgussteils aus einem Werkzeug einer Spritzgießmaschine. Der Riemen bzw. die Riemenspannung unterliegt im Betrieb oftmals jedoch keiner Überwachung, das heißt, dass es beim Einfahren einer Handhabungsanwendung zum unvorhersehbaren Bruch des Riemens kommen kann, beispielweise durch falsche Einstellung der Riemenspannung, Ermüdung des Riemens, Überlast oder durch mechanisches Versagen, und somit die Maschine beschädigt oder schlimmstenfalls ein sich im Gefahrenbereich befindlicher Mitarbeiter von der unkontrollierten Bewegung der Tauchachse verletzt werden könnte. Daher ist es notwendig, die Riemenspannung, insbesondere bei Inbetriebnahme der Tauchachse korrekt einzustellen und zu überwachen.

Bekannt sind im Stand der Technik Verfahren zur Überwachung des zum Betrieb der Achse notwendigen Drehmoments, wobei die Überwachung mit Hilfe des Strombedarfs der Antriebsachse erfolgt. Übersteigt der Strombedarf der Achse einen vorgegebenen Wert, kann dies beispielsweise darauf hindeuten, dass eine Störung vorliegt und die Achse z.B. gegen einen Widerstand stößt, worauf die Bewegung der Achse gestoppt wird.

Aus der dem Oberbegriff der unabhängigen Ansprüche zugrundeliegenden US 4 968 214 A ist eine Vorrichtung bekannt, eingerichtet zur Einstellung und Überwachung einer Riemenspannung und/oder einer Riemensteifigkeit eines Riemens an einer Spritzgießanlage zur Verarbeitung von Kunststoffen und anderer plastifizierbarer Massen, mit wenigstens einer Riemenspanneinrichtung, welche dazu eingerichtet ist, die Riemenspannung und/oder die Riemensteifigkeit des Riemens einzustellen, wobei die Spritzgießanlage eine Formschließeinheit mit einem zwischen Werkzeugplatten aufgenommenem Spritzgießwerkzeug mit einem Formhohlraum umfasst, der dazu eingerichtet ist, ein Spritzgussteil zu formen.

Aus der DE 10 2012 008 242 A1 ist eine Greifeinrichtung zum Greifen und Transport eines Blattgutstapels mit einem Riemen und einem Anhaltmechanismus offenbart. Der Anhaltmechanismus überwacht die Riemenspannung durch einen Sensor und stoppt bei einer Überschreitung einer bestimmten Riemenspannung den Antrieb der Riemenbewegung.

In der DE 10 2017 124 132 A1 ist ein Verfahren zur Überwachung der Riemenspannung des Antriebriemens einer Ringspannmaschine offenbart, wobei die Überwachung der Riemenspannung des Tangentialriemens der Ringspannmaschine durch eine Sensoreinrichtung erfolgt, die an eine Maschinensteuerung der Ringspannmaschine angeschlossen ist. Die durch die Sensoreinrichtung ermittelten Riemenspannungsdaten werden in der Maschinensteuerung verarbeitet und über ein Display visualisiert. Die Sensoreinrichtung weist eine gelagerte Umlenkrolle auf, gegen die der Riemen im Betrieb gedrückt wird und welche wiederum mit einem Drucksensor beziehungsweise mit einer Druckmessdose korrespondiert. Erreicht die Riemenspannung einen vorgegeben maximalen Wert, wird eine Warneinrichtung ausgelöst und die Ringspannmaschine abgeschaltet.

In der DE 10 2017 114 792 A1 ist eine Ringspannmaschine mit einem umlaufenden Tangentialriemen offenbart, wobei die Ringspannmaschine die Riemenspannung mittels einer Überwachungseinrichtung und Sensoreinrichtungen überwacht. Um den Tangentialriemen während des Spinnbetriebes auf einem eingestellten optimalen Wert zu halten, ist eine Riemenspannvorrichtung vorgesehen, welche an eine Regeleinrichtung angeschlossen ist und die Messwerte der Sensoreinrichtung erhält.

Die CN 104 357 967 A offenbart eine automatische Spanneinrichtung für einen Riemen an einer Maschine der textilverarbeitenden Industrie mit einem Zylinder, einem Kolben, einer Feder und einer Rolle. Der Kolben ist über einen Drucksensor mit der Feder verbunden und die Feder ist mit einer Schubstange verbunden, wobei die Schubstange durch die Feder geführt wird. Die Spannung des Riemens wird mit dem Drucksensor gemessen und kann über die Feder bzw. die daran angeordnete Rolle entsprechend eingestellt werden.

In der EP 1 397 954 A1 ist eine landwirtschaftliche Maschine offenbart, wobei ein Riemenspanner in Form eines Hydraulikzylinders mit einem Sensor ausgestattet ist. Der Sensor am Riemenspanner erfasst die zum Aufrechterhalten der Mindestspannung erforderliche Auslenkung des Riemenspanners. Die Riemenspanndaten des Sensors können weiter über eine Auswerteelektronik an einer optischen Anzeigeeinrichtung angezeigt werden.

Ähnlich wie bereits in der EP 1 397 954 A1 ist auch in der EP 3 146 833 B1 eine landwirtschaftliche Arbeitsmaschine offenbart, wobei der Riemenspanner passiv ausgestaltet sein kann und über eine Federanordnung auf den Antriebsriemen federvorgespannt ist. Weiter ist ein Riemendehnungssensor vorgesehen, der zur Erzeugung eines Riemendehnungssignals die Auslenkung des Riemenspanners ermittelt. Je nach Riemendehnungssignal steuert die Maschinensteuerung die Arbeitsmaschine während des Arbeitsbetriebs.

Die DE 20 2005 006 791 U1 offenbart eine Befestigungseinrichtung an einem Riementrieb, wobei ein freies Ende eines Riemens an einem Maschinenelement befestigt ist. Der Riemen wird in ein Klemmteil eingespannt, welches mit einer zur Zugrichtung orthogonal wirkenden Klemmkraft beaufschlagt wird. Mit einer Stellschraube kann die relative Lage des Klemmteils zum Spannen des Riemens eingestellt werden-

Ebenfalls eine Spanneinrichtung ist in de CN 111 609 100 A offenbart, wobei die Riemenspannung mit einer Schraube eingestellt werden kann.

Die im Stand der Technik beschriebenen Vorrichtungen haben den Nachteil, dass zur korrekten Einstellung und Überwachung wenigstens zwei separate Vorrichtungen bzw. eine Sensoreinrichtung und eine Spanneinrichtung vorgesehen sind, welche gewährleisten, dass der Riemen bzw. die Riemenspannung überwacht und entsprechend eingestellt werden kann. Dies macht den Aufbau, die Einrichtung, die Einstellung und die Überwachung einer entsprechenden Tauchachse aufwendig, komplex und kostenintensiv.

Ausgehend von diesem Stand der Technik liegt der vorliegenden Erfindung die Aufgabe zugrunde, eine Vorrichtung und ein Verfahren zur Einstellung und Überwachung einer Riemenspannung und/oder einer Riemensteifigkeit eines Riemens einer Spritzgießanlage zur Verarbeitung von Kunststoffen bereitzustellen, welche eine einfache, effektive und sichere Einstellung und Überwachung ermöglichen.

Diese Aufgabe wird durch eine Vorrichtung, eingerichtet zur Einstellung und Überwachung einer Riemenspannung und/oder einer Riemensteifigkeit mit den Merkmalen des Anspruches 1 sowie durch ein Verfahren zur Einstellung und Überwachung einer Riemenspannung und/oder einer Riemensteifigkeit mit den Merkmalen des Anspruchs 9 gelöst.

Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Die Vorrichtung ist eingerichtet zur Einstellung und Überwachung einer Riemenspannung und/oder einer Riemensteifigkeit eines Riemens einer Spritzgießanlage zur Verarbeitung von Kunststoffen und anderer plastifizierbarer Massen und weist wenigstens eine Sensoreinrichtung auf, welche dazu eingerichtet ist, die Riemenspannung und/oder die Riemensteifigkeit des Riemens zu überwachen. Wenigstens eine Riemenspanneinrichtung ist vorgesehen, welche dazu eingerichtet ist, die Riemenspannung und/oder die Riemensteifigkeit des Riemens einzustellen. Die Spritzgießanlage umfasst eine Formschließeinheit mit einem zwischen Werkzeugplatten aufgenommenem Spritzgießwerkzeug mit einem Formhohlraum, der dazu eingerichtet ist, ein Spritzgussteil zu formen. Für eine möglichst einfache, effektive und sichere Einstellung und Überwachung der Riemenspannung ist die Riemenspanneinrichtung wenigstens ein Teil der Sensoreinrichtung und der Riemen ist als ein stehender und endlicher Riemen ausgeführt, wobei die Sensoreinrichtung an einem Ende entlang der Längsrichtung des Riemens angeordnet ist. Vorteilhaft kann so nicht nur der Lastzustand des Riemens, sondern auch eine dynamische Messung bei einem Betrieb des Riemens vorgenommen werden.

Die Anordnung der Sensoreinrichtung entlang der Längsrichtung des Riemens führt vorteilhaft dazu, dass sich so keine "schrägen" und/oder senkrechten Anteile der Riemenspannung bzw. Anteile der Riemenspannung mit einem Winkel zwischen der gemessenen Riemenspannung und dem Riemen ergeben. Die Anteile müssten zunächst erst aus der tatsächlich gemessenen Riemenspannung herausgerechnet werden, um die exakte Riemenspannung zu erhalten. Die Kraft der Riemenspannung verläuft vorzugsweise in der Regel im Wesentlichen parallel zu dem Verlauf des Riemens, d.h. der Winkel zwischen der Krafteinwirkung bzw. der Kraftmessung und dem Riemen beträgt z.B. null Grad, wobei auch ein Winkel von einigen Grad möglich ist.

Für eine vorteilhaft einfache Einstellung und sichere Überwachung der Riemenspannung ist der Riemen als stehender und endlicher Riemen ausgeführt und die Sensoreinrichtung an einem Ende des Riemens angeordnet. "Stehend" bedeutet dabei, dass der Riemen an seinem einen Ende mit einer Lagerung fest verbunden ist, so dass sich in der Regel die über den Riemen angetriebenen Elemente relativ zu und entlang des Riemens bewegen.

Es kann weiter vorteilhaft nicht nur die Vorspannung des Riemens, sondern auch die Zugbelastung des Riemens erfasst werden. Mit der Riemenspanneinrichtung kann beispielsweise die Riemenspannung des Riemens bei Inbetriebnahme der Maschine auf eine Betriebsspannung eingestellt werden. Die Riemenspanneinrichtung wird dafür solange betätigt, bis die von der Sensoreinrichtung erfasste, überwachte und bevorzugt angezeigte Betriebsspannung erreicht ist. Vorteilhaft ergibt sich so eine einfache und genaue Einstellung der Riemenspannung.

Die Riemenspanneinrichtung wird bevorzugt solange betätigt, bis wenigstens ein Signal, z.B. ein optisches, akustisches, haptisches oder sonstiges Signal dem Bediener anzeigt, dass die Betriebsspannung erreicht ist. Beispielsweise lässt sich dies durch ein optisches Signal, beispielsweise eine LED realisieren, die umso schneller blinkt, je mehr die Betriebsspannung erreicht wird, bzw. durchgehend leuchtet, wenn die Betriebsspannung erreicht ist. Denkbar ist auch, dass die LED ihre Farbe entsprechend wechselt, z.B. von rot auf grün.

Im weiteren Betrieb des Riemens kann die Riemenspannung überwacht und gegebenenfalls neu eingestellt oder nachgezogen werden. Denkbar ist auch, dass die Riemenspannung über einen Zeitraum überwacht und wenigstens ein Mittelwert gebildet wird, welcher mit der vorgegebenen Betriebsspannung verglichen wird. Prinzipiell ist es auch möglich, dass die Riemenspannung mit der Riemenspanneinrichtung zu einem anderen Zeitpunkt, beispielsweise zwischen Spritzgusszyklen oder bei einem Werkzeugwechsel eingestellt wird.

Bevorzugt ist eine über den Riemen angetriebene, schwerkraftbelastete Achse vorgesehen, die z.B. als Tauchachse dazu eingerichtet ist, das Spritzgussteil aus dem Spritzgießwerkzeug zu entnehmen. Der Riemen kann so überwacht werden, wodurch vorteilhaft die Sicherheit aufgrund z.B. einer Ermüdung des Riemens, einer Überlast oder einem mechanischen Versagen erhöht wird.

Die Sensoreinrichtung ist bevorzugt an einem stehenden Ende des Riemens angeordnet. Vorteilhaft kann dadurch die Vorspannung des Riemens sowie die Zugkraft im Riemen sehr genau bestimmt werden.

Die Spritzgießanlage umfasst bevorzugt wenigstens eine Spritzgießmaschine und wenigstens ein zugehöriges Peripheriegerät, z.B. einen Greifer oder einen Robot, wobei wenigstens eines der Elemente umfassend den Riemen, die Achse, die Riemenspanneinrichtung und/oder die Sensoreinrichtung ein Teil des Peripheriegeräts ist.

Bevorzugt ist die Sensoreinrichtung dazu eingerichtet, Riemenspannungsdaten zu erfassen und an wenigstens eine Maschinensteuerung zu übermitteln, welche dazu eingerichtet ist, die Riemenspannungsdaten zu verarbeiten, aufzuzeichnen und/oder über wenigstens einen Bildschirm zu visualisieren. Vorteilhaft lässt sich so die Riemenspannung beispielsweise im Betrieb der Spritzgießanlage und/oder deren Peripherie durchgängig überwachen und für eine Auswertung aufzeichnen, wodurch die Sicherheit weiter erhöht wird. Die Riemenspannungsdaten können beispielsweise als eine Kurve auf der Maschinensteuerung visualisiert werden. Prinzipiell sind auch andere Visualisierungen denkbar, beispielsweise als eine Balken- oder Zahlendarstellung. Die Maschinensteuerung kann beispielsweise eine Maschinensteuerung der Spritzgießanlage und/oder deren Peripherie sein.

Für eine vorteilhaft sichere, einfache und korrekte Überwachung weist die Sensoreinrichtung bevorzugt wenigstens einen Druck-, Biege- und/oder Zugkraftsensor auf. Beispielsweise ist es auch denkbar, mehrere Sensoren in der Sensoreinrichtung miteinander zu kombinieren, wodurch sich vorteilhaft eine überprüfende Redundanz ergibt.

Bevorzugt ist die Maschinensteuerung dazu eingerichtet, in Abhängigkeit der Riemenspannungsdaten die Riemenspanneinrichtung, die Spritzgießanlage und/oder deren Peripherie zu steuern, wodurch sich vorteilhaft eine komfortable, sichere und einfache Steuerung ergibt. Beispielsweise kann vor dem Betrieb der Spritzgießanlage und/oder deren Peripherie die Riemenspannung mittels der Riemenspanneinrichtung auf einen bestimmten Wert eingestellt werden und der Maschinensteuerung der Wert sowie wenigstens ein Toleranzwert für wenigstens einen Toleranzbereich um den eingestellten Wert mitgeteilt werden. Die Maschinensteuerung überwacht die von der Sensoreinrichtung übermittelten Riemenspannungsdaten. Liegen die Daten beispielsweise außerhalb des vorgegebenen Toleranzbereichs, steuert die Maschinensteuerung die Spritzgießanlage daraufhin so, dass z.B. wenigstens eine am Riemen angreifende Kraft verringert oder die Spritzgießanlage komplett gestoppt wird. Denkbar ist auch, dass z.B. bei zu niedriger Riemenspannung die Spritzgießanlage und/oder deren Peripherie kurz gestoppt wird und entweder die Riemenspannung manuell mittels der Riemenspanneinrichtung erhöht wird oder die Riemenspanneinrichtung die Riemenspannung selbsttätig erhöht.

Bevorzugt können die Riemenspannungsdaten z.B. als eine Kurve dargestellt werden, welche z.B. auf der Maschinensteuerung angezeigt und überwacht wird. Ohne Aufbringen einer äußeren Last (Greiferzuladung oder Dynamik) sollte die Riemenspannung konstant sein. Über den Spritzgießprozess hinweg kommt es jedoch zu einer sich ändernden Belastung des Riemens und damit zu entsprechenden Riemenspannungsdaten. Liegen die von der Sensoreinrichtung gemessenen Daten nicht innerhalb eines vorgegebenen oder vorgebaren Toleranzbereichs, kann beispielsweise ein Hinweis, z.B. auf der Maschinensteuerung ausgegeben werden. Denkbar sind zudem weitere Eskalationsstufen, wie z.B. ein Hinweis, eine Warnung und/oder ein Stopp, welche jeweils wenigstens einem Toleranzbereich zugeordnet sind. Wird der entsprechende Toleranzbereich unter- bzw. überschritten, wird die entsprechende Eskalationsstufe ausgegeben, beispielsweise auf der Maschinensteuerung, und/oder ausgelöst, indem z.B. ein Hinweis oder eine Warnung ausgegeben wird, wenigstens eine am Riemen angreifende Kraft verringert wird und/oder die komplette Spritzgießanlage und/oder deren Peripherie gestoppt wird.

Die Eskalationsstufe kann auch fortschreiten, indem beispielsweise eine Zeitspanne vergeht, in der nicht auf die Eskalationsstufe reagiert wird, sodass bevorzugt automatisch die nächste Eskalationsstufe eingeleitet wird. Beispielsweise kann bei Über- oder Unterschreitung des Toleranzbereichs zunächst ein Hinweis ausgegeben werden. Wird auf diesen Hinweis nicht innerhalb einer Zeitspanne reagiert, wird eine Warnung ausgegeben. Wird auch auf die Warnung nicht innerhalb einer Zeitspanne reagiert, wird beispielsweise wenigstens eine angreifende Kraft am Riemen verringert und/oder die Spritzgießanlage und/oder deren Peripherie werden stillgelegt. Denkbar sind aber auch beliebige weitere Eskalationsstufen und Ereignisse.

Auch ist es bevorzugt denkbar, dass die Maschinensteuerung die Riemenspanneinrichtung steuert, wobei je nach gemessener Riemenspannung die Riemenspannung und/oder die Riemensteifigkeit entsprechend auf eine bestimmte Riemenspannung, z.B. auf die vorgegebene Betriebsspannung erhöht oder verringert wird. Wird beispielsweise eine zu geringe Riemenspannung von der Sensoreinrichtung registriert, wird die Riemenspanneinrichtung von der Maschinensteuerung z.B. mittels einer automatischen Nachsteuerung gesteuert. Prinzipiell sind jedoch noch weitere Steuerungsmöglichkeiten denkbar, insbesondere dass die Maschinensteuerung die Riemenspanneinrichtung und/oder die Spritzgießanlage gleichzeitig steuert.

Für eine vorteilhafte einfache, effektive und schnelle Einstellung der Riemenspannung weist die Sensoreinrichtung bevorzugt wenigstens ein Messelement, z.B. eine Unterlegscheibe, eine Feder, einen Dehnungsmessstreifen oder ein Piezoelement und wenigstens ein Spannelement, z.B. eine Spannschraube oder einen Federspanner auf, wobei das wenigstens eine Spannelement die Riemenspanneinrichtung ist. Über das Spannelement, welches bevorzugt mit dem Messelement zusammenwirkt, kann die Riemenspannung eingestellt werden. Beispielsweise kann die Unterlegscheibe als eine "messende" Unterlegscheibe ausgeführt und unter dem Schraubenkopf der Spannschraube angeordnet sein. über die Spannschraube wird der Riemen auf die Betriebsspannung voreingestellt, wobei über ein vorgegebenes Toleranzband ein sicherer Betriebsbereich definiert wird, welcher von der Maschinensteuerung bevorzugt durchgängig überwacht wird.

Die Aufgabe wird zudem durch ein Verfahren mit den Merkmalen des Anspruchs 10 gelöst. Für eine einfache, effektive und sichere Einstellung und Überwachung der Riemenspannung wird zur Überwachung und Einstellung einer Riemenspannung und/oder einer Riemensteifigkeit eines Riemens einer Spritzgießanlage zur Verarbeitung und Kunststoffen und anderer plastifizierbarer Massen mit einer Formschließeinheit mit einem zwischen Werkzeugplatten aufgenommenem Spritzgießwerkzeug, in dessen Formhohlraum ein Spritzgussteil geformt wird, wenigstens eine Sensoreinrichtung verwendet, welche die Riemenspannung und/oder die Riemensteifigkeit überwacht. Dabei wird mit wenigstens einer Riemenspanneinrichtung die Riemenspannung und/oder die Riemensteifigkeit des Riemens eingestellt, wobei als Riemenspanneinrichtung wenigstens ein Teil der an einem Ende entlang der Längsrichtung des Riemens angeordneten Sensoreinrichtung und als Riemen ein stehender und endlicher Riemen verwendet wird.

Wird die Riemenspannung in Längsrichtung des Riemens gemessen, ergibt sich vorteilhaft eine genauere Messung der Riemenspannung, da "schräge" Anteile der Riemenspannung bzw. Anteile der Riemenspannung mit einem Winkel zwischen der Riemenspannung und dem Riemen nicht auftreten. Die Kraft der Riemenspannung verläuft im Wesentlichen in der Regel parallel zu dem Verlauf des Riemens, d.h. der Winkel zwischen der Krafteinwirkung und dem Riemen beträgt vorzugsweise null Grad, wobei auch ein anderer Winkel möglich ist.

Beispielsweise kann bei einer erstmaligen Einrichtung der Spritzgießanlage die Riemenspannung mit der Riemenspanneinrichtung auf eine Betriebsspannung eingestellt werden. Mit der Sensoreinrichtung wird die eingestellte Riemenspannung überwacht, sodass der aktuell eingestellte Wert der Riemenspannung nachvollzogen werden kann und, falls die Riemenspannung zu niedrig oder zu hoch eingestellt sein sollte, die Riemenspannung mit der Riemenspanneinrichtung entsprechend korrigiert werden kann.

Denkbar ist auch, dass die Riemenspannung über einen Zeitraum überwacht und wenigstens ein Mittelwert gebildet wird, welcher mit der vorgegebenen Betriebsspannung verglichen wird. Vorteilhaft kann so eine Lebensdauer des Riemens abgeschätzt werden.

Bevorzugt entnimmt eine über den stehend und endlich ausgeführtem Riemen angetriebene, schwerkraftbelastete Achse als Tauchachse das Spritzgussteil aus dem Spritzgießwerkzeug. Vorteilhaft wird so die Sicherheit erhöht, da insbesondere bei der Entnahme des Spritzgussteils der Riemen stark beansprucht wird.

Als Spritzgießanlage wird bevorzugt wenigstens eine Spritzgießmaschine und wenigstens ein zugehöriges Peripheriegerät, z.B. ein Greifer oder ein Robot verwendet, wobei wenigstens eines der Elemente umfassend den Riemen, die Achse, die Riemenspanneinrichtung und/oder die Sensoreinrichtung als ein Teil des Peripheriegeräts verwendet wird.

Um vorteilhaft eine übersichtliche und sichere Einstellung und Überwachung der Riemenspannung zu gewährleisten, werden bevorzugt mit der Sensoreinrichtung Riemenspannungsdaten erfasst und an wenigstens eine Maschinensteuerung übermittelt, wobei die Riemenspannungsdaten durch die Maschinensteuerung verarbeitet, aufgezeichnet und/oder über wenigstens einen Bildschirm visualisiert werden. Durch die Visualisierung auf dem Bildschirm kann ferner vorteilhaft beispielsweise bei der Einrichtung der Spritzgießanlage und/oder deren Peripherie der aktuell eingestellte Wert der Riemenspannung überwacht und abgelesen werden. Entspricht der Wert z.B. nicht der Betriebsriemenspannung, kann der Wert mit der Riemenspanneinrichtung entsprechend erhöht oder verringert werden.

Bevorzugt werden z.B. durch die Maschinensteuerung in Abhängigkeit der Riemenspannungsdaten die Riemenspanneinrichtung, die Spritzgießanlage und/oder deren Peripherie gesteuert, wodurch sich vorteilhaft eine einfache, sichere und komfortable Bedienung ergibt. Je nach Riemenspannungsdaten, z.B. bei einer zu hohen Riemenspannung, kann die Spritzgießanlage und/oder deren Peripherie entsprechend gesteuert, z.B. gestoppt werden. Ferner ist es beispielsweise möglich, dass bei einer zu geringen Riemenspannung die Riemenspanneinrichtung durch die Maschinensteuerung betätigt wird, welche die Riemenspannung wieder auf eine vorgegebene Betriebsspannung einstellt.

Für eine vorteilhaft erhöhte Sicherheit wird bevorzugt wenigstens ein Signal ausgegeben, sobald die Riemenspannung und/oder die Riemensteifigkeit wenigstens einen definierten Toleranzbereich unter- oder überschreitet. Der Toleranzbereich kann beispielsweise bei der Einstellung der Betriebsspannung des Riemens der Maschinensteuerung vorgegeben werden, indem zusätzlich zu dem Wert der Betriebsspannung wenigstens ein Toleranzwert vorgegeben wird, z.B. in der Maschinensteuerung. Das Signal kann z.B. als ein akustisches, optisches, haptisches und/oder sonstiges Signal ausgegeben werden. Prinzipiell denkbar sind auch mehrere Eskalationsstufen des Signals, beispielsweise von einem Hinweis über eine Warnung bis hin zu einem Stopp der gesamten Maschine. Beispielsweise kann das Signal bevorzugt als eine Warnung auf der Maschinensteuerung ausgegeben werden, wodurch vorteilhaft eine schnelle und sichere Benachrichtigung von Mitarbeitern erfolgt. Prinzipiell ist denkbar, dass das Signal beispielsweise als akustisches, optisches, haptisches und/oder sonstiges Signal von einem Mitarbeiter wahrgenommen werden kann beispielsweise durch Lampen, Lautsprecher und/oder sonstige Signaleinrichtungen, wie beispielsweise die Maschinensteuerung.

Für eine vorteilhafte erhöhte Sicherheit veranlasst bevorzugt z.B. die Maschinensteuerung in Reaktion auf das Signal wenigstens eine der folgenden Maßnahmen, nämlich a) eine Reduzierung wenigstens einer am Riemen angreifenden Kraft, b) ein Stopp der wenigstens einen am Riemen angreifenden Kraft der Spritzgießmaschine und/oder der Peripherie der Spritzgießmaschine. Beispielsweise kann während des Betriebs die Bewegung der Achse verringert oder gestoppt werden.

Bevorzugt kann durch eine Kurvenüberwachung der typischen Betriebskräfte bei untypischen Ereignissen eine unmittelbare Reduzierung der am Riemen angreifenden Kräfte eingeleitet werden, um vorteilhaft Schäden, beispielsweise an einem Werkzeug, einem Greifer oder einem Robot, zu vermeiden.

Zur vorteilhaften Unterstützung von predictive maintenance wird bevorzugt zur Ermittlung eines Arbeitspunktes des Riemens die Belastung des Riemens erfasst und integriert. Mithilfe beispielsweise wenigstens einer Kraftmessung kann die Belastung des Riemens erfasst und beispielsweise über eine bestimmte Zeit integriert werden. Möglich ist auch, dass beispielsweise eine Druckmessung durchgeführt wird, welche über den zurückgelegten Weg des Riemens integriert wird.

Für eine vorteilhafte Erhöhung der Sicherheit wird bevorzugt in Abhängigkeit des Integrals wenigstens eine Vorhersage der Restlebensdauer des Riemens erstellt. Unter Einbeziehung beispielsweise der Geometrie des Riemens, der Kenndaten des Materials des Riemens sowie der auf den Riemen wirkenden Kräfte kann eine Vorhersage erstellt werden. Dem Betreiber der Spritzgießanlage und/oder deren Peripherie kann somit vorteilhaft angezeigt werden, dass z.B. ein Tausch des Riemens geplant werden muss. Werden die Daten gespeichert, lässt sich über das Belastungsintegral feststellen, wann eine Überlastung stattfand z.B. durch ein zu hohes Greifer- und Bauteilgewicht oder durch eine kollisionsbedingte Überlast, was vorteilhaft dazu verwendet werden kann, gezielt Überlastungen im Prozess zu vermeiden.

Für eine vorteilhaft einfache, effektive und gleichzeitig sichere Überwachung und Einstellung der Riemenspannung wird bevorzugt wenigstens ein Spannelement, z.B. eine Spannschraube oder ein Federspanner der Sensoreinrichtung als Riemen-spanneinrichtung zur Einstellung der Riemenspannung verwendet.

Weitere Vorteile ergeben sich aus den Unteransprüchen und der nachfolgenden Beschreibung eines bevorzugten Ausführungsbeispiels. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Im Folgenden wird die Erfindung anhand eines in den beigefügten Figuren dargestellten Ausführungsbeispiels näher erläutert. Es zeigen:
- Fig. 1: eine Spritzgießanlage von hinten,
- Fig. 2: die Spritzgießanlage gemäß Fig. 1 von vorne,
- Fig. 3: eine Vorrichtung zur Einstellung und Überwachung einer Riemenspannung,
- Fig. 4: einen Detailausschnitt gemäß Fig. 3 mit einem Drucksensor,
- Fig. 5: eine Vorrichtung mit einem Drucksensor,
- Fig. 6: eine Vorrichtung mit einem Zugkraftsensor,
- Fig. 7: eine Vorrichtung mit einem Biegesensor,
- Fig. 8: eine Vorrichtung mit einem Biege- und einem Drucksensor,
- Fig. 9: eine schematische Darstellung der Vorrichtung zur Einstellung und Überwachung einer Riemenspannung,
- Fig. 10: ein schematisches Diagramm.

### Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

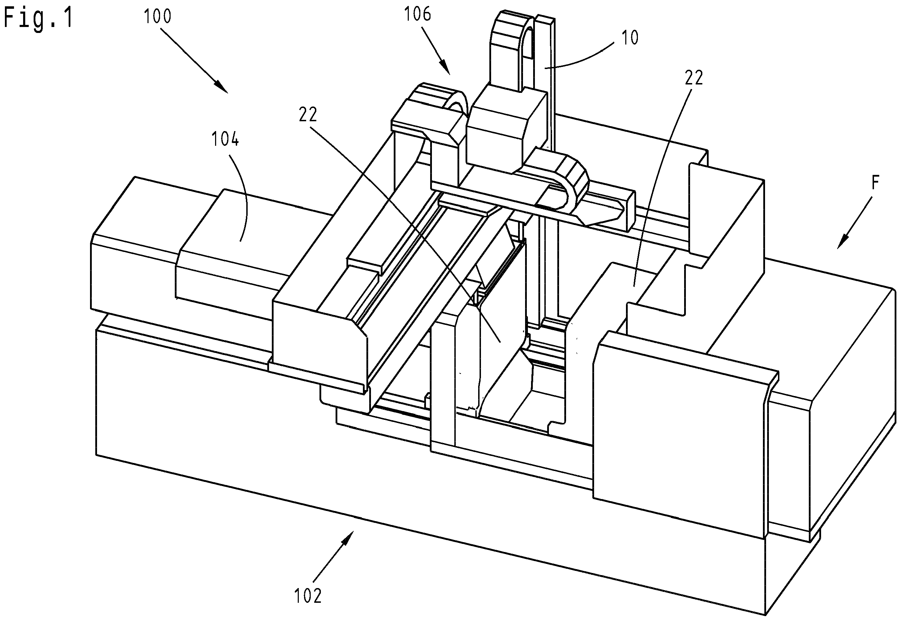

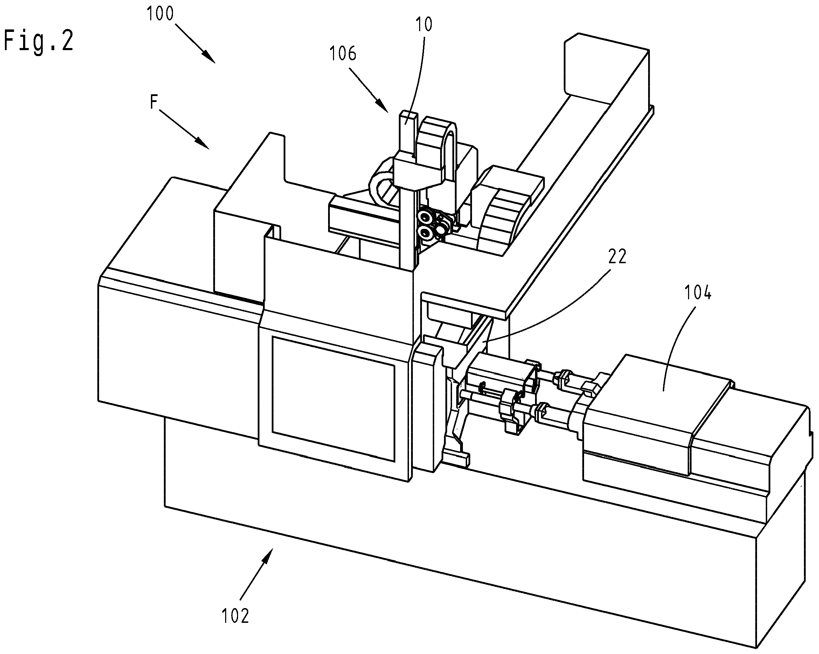

Die Fig. 1 und 2 zeigen eine Spritzgießanlage 100 mit einer Formschließeinheit F und mit einem zwischen Werkzeugplatten 22 aufgenommenem (nicht dargestellten) Spritzgießwerkzeug mit einem Formhohlraum, der dazu eingerichtet ist, ein Spritzgussteil zu formen. In Fig. 1 ist der geöffnete Zustand des Spritzgießwerkzeugs gezeigt. Bei einem Spritzgießprozess wird zunächst das Spritzgießwerkzeug mittels der Formschließeinheit F geschlossen und danach mittels einer Spritzgießeinheit 104 plastifizierbares Material in das Spritzgießwerkzeug eingespritzt. Nach erfolgreichem Plastifizierungsprozess wird das Spritzgießwerkzeug wieder geöffnet und das geformte Spritzgussteil kann über eine Achse 10, z.B. eine Tauchachse von oben aus dem Spritzgießwerkzeug entnommen werden.

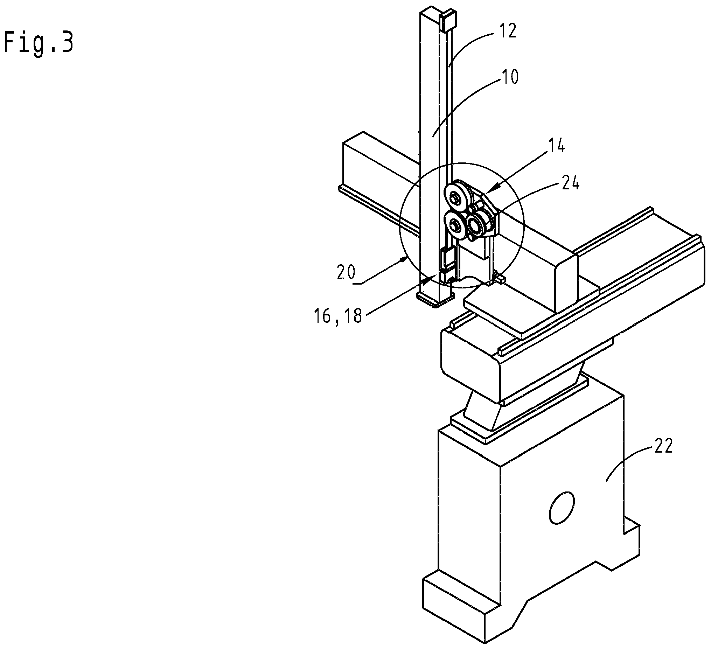

In Fig. 3 ist ein Teil der Spritzgießanlage 100 mit einer Vorrichtung zur Einstellung und Überwachung einer Riemenspannung und/oder einer Riemensteifigkeit eines Riemens 12 dargestellt. Aufbau und Betrieb einer derartigen Spritzgießanlage 100 zur Verarbeitung von Kunststoffen und anderer plastifizierbarer Massen umfassend in der Regel die Spritzgießeinheit 104 sowie die Formschließeinheit F mit dem zwischen Werkzeugplatten 22 aufgenommenem (Spritzgieß-)Werkzeug, in dessen Formhohlraum ein Spritzgussteil geformt wird, sind dem Fachmann bekannt, so dass hierauf im Folgenden nur in so weit eingegangen wird, als es für das Verständnis der Erfindung erforderlich ist.

Im Ausführungsbeispiel in Fig. 3 ist auf einer Werkzeugplatte 22 der Spritzgießanlage 100 eine Achse 10, z.B. eine Tauchachse angeordnet, welche beispielsweise nach einem abgeschlossenen Spritzgießprozess das Spritzgussteil von oben aus dem (nicht dargestellten) Werkzeug entnimmt. Die Achse 10 wird über einen Antrieb 24 angetrieben, welcher mit dem Riemen 12 in Verbindung steht. Bevorzugt können über eine Rollenanordnung 14, welche z.B. Spann-, Umlenk- und/oder Führungsrollen aufweist, vorteilhaft z.B. starke Lastwechsel abgefedert, Riemenschwingungen verringert und/oder der Riemen in der Spur gehalten werden. Die Riemenspannung und/oder die Riemensteifigkeit wird im Ausführungsbeispiel in Fig. 3 mit einer Sensoreinrichtung 16 überwacht und mit einer Riemenspanneinrichtung 18 eingestellt, wobei die Riemenspanneinrichtung 18 wenigstens ein Teil der Sensoreinrichtung 16 ist. Weiter ist der Riemen 12 in Fig. 3 als ein stehender und endlicher Riemen ausgeführt und die Sensoreinrichtung 16 ist an einem Ende entlang der Längsrichtung des Riemens 12 angeordnet. Vorteilhaft werden so eine einfache, effektive und sichere Einstellung und Überwachung ermöglicht.

In einem Ausführungsbeispiel in Fig. 1 oder 2 ist eine über den Riemen 12 angetriebene, schwerkraftbelastete Achse 10 vorgesehen ist, die als Tauchachse dazu eingerichtet ist, das Spritzgussteil aus dem Spritzgießwerkzeug zu entnehmen.

Die Sensoreinrichtung 16 ist in einem weiteren Ausführungsbeispiel gemäß Fig. 3 an einem stehenden Ende des Riemens 12 angeordnet ist.

Die Spritzgießanlage 100 umfasst in einem weiteren Ausführungsbeispiel gemäß Fig. 1 und 2 wenigstens eine Spritzgießmaschine 102 und wenigstens ein zugehöriges Peripheriegerät 106, z.B. einen Greifer oder einen Robot, wobei wenigstens eines der Elemente umfassend den Riemen 12, die Achse 10, die Riemenspanneinrichtung 18 und/oder die Sensoreinrichtung 16 ein Teil des Peripheriegeräts 106 ist.

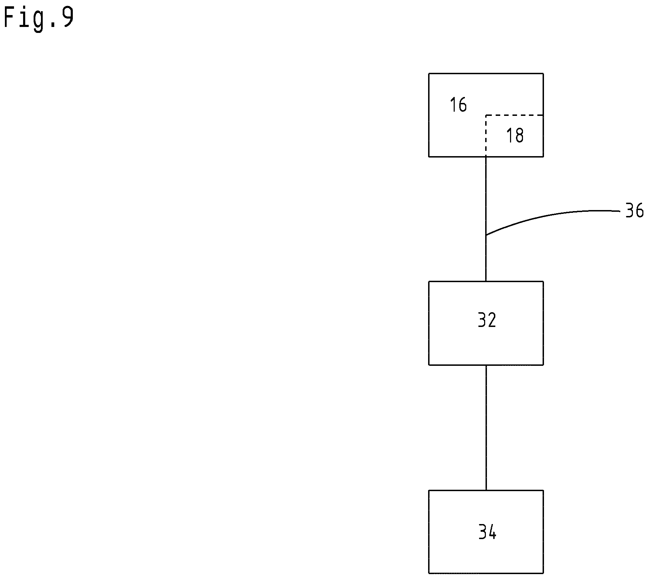

Wie in einem weiteren Ausführungsbeispiel gemäß Fig. 9 schematisch dargestellt, ist die Sensoreinrichtung 16 dazu eingerichtet, Riemenspannungsdaten 36 zu erfassen und an wenigstens eine Maschinensteuerung 32 zu übermitteln, welche dazu eingerichtet ist, die Riemenspannungsdaten 36 zu verarbeiten, aufzuzeichnen und/oder über wenigstens einen Bildschirm 34 zu visualisieren. Die Maschinensteuerung 32 kann z.B. direkt an der Spritzgießanlage 100, deren Peripherie und/oder auf einem mobilen Gerät integriert sein und den wenigstens einen Bildschirm 34 umfassen, welcher z.B. als ein Touchscreen ausgeführt sein kann. Die Maschinensteuerung 32 steht mit der Sensoreinrichtung 16 und/oder der Riemenspanneinrichtung 18 in Verbindung und kann deren Daten verarbeiten, aufzeichnen und auf dem Bildschirm 34 visualisieren.

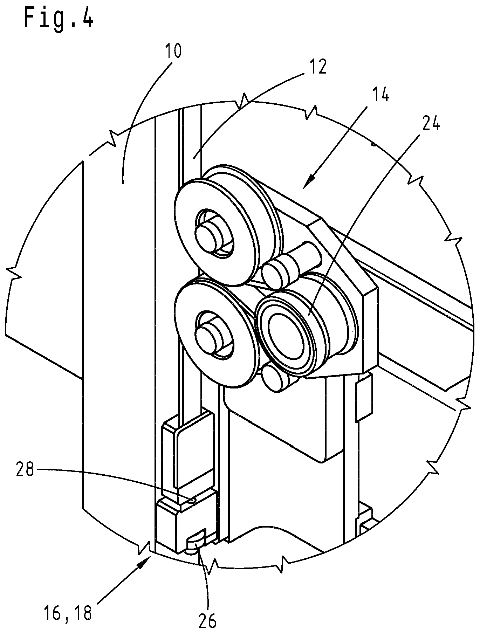

Im Ausführungsbeispiel gemäß Fig. 4 (Ausschnitt 20 in Fig. 3) weist die Sensoreinrichtung 16 wenigstens einen Drucksensor auf, wobei die Druckmessung mit Hilfe einer Unterlegscheibe als Messelement 26 erfolgt, welche unter dem Schraubenkopf einer Spannschraube als Spannelement 28 angeordnet ist. Über die Spannschraube lässt sich der Riemen 12 spannen, indem die Spannschraube z.B. angezogen wird, woraufhin der Schraubenkopf gegen die Unterlegscheibe drückt. Je nach Drehung wird mehr oder weniger Druck auf die Unterlegscheibe ausgeübt, welche den Druck registriert, so dass so die eingestellte Riemenspannung ermittelt werden kann.

Die Riemenspanneinrichtung 18 ist in einem Ausführungsbeispiel wenigstens ein Teil der Sensoreinrichtung 16. Die Sensoreinrichtung 16 funktioniert in einem weiteren Ausführungsbeispiel nur durch das Zusammenwirken des Messelements 26, z.B. einer Unterlegscheibe, und des Spannelements 28, z.B. einer Spannschraube. Der Riemen 12 wird mittels der Riemenspanneinrichtung 16 z.B. gespannt, indem das Spannelement 28, z.B. die Spannschraube betätigt wird.

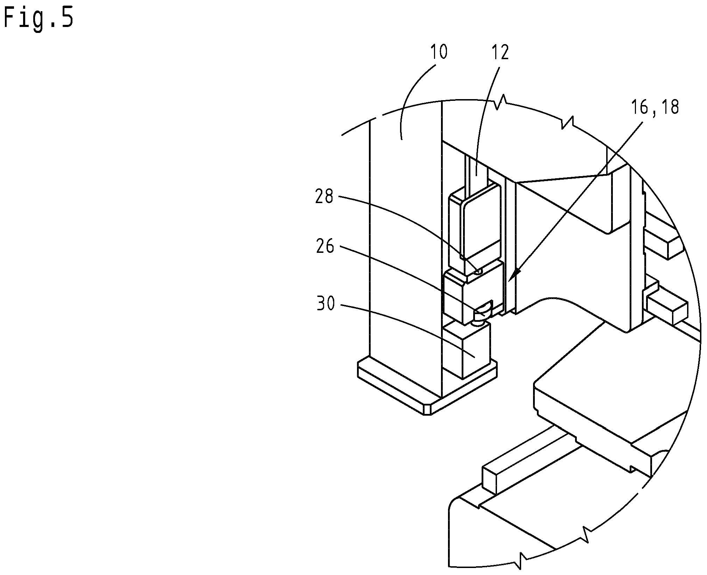

In einem weiteren bevorzugten Ausführungsbeispiel in Fig. 5 ist wenigstens ein Aktor 30 vorgesehen, der das Spannelement 28 betätigt. Beispielsweise wird bei einer zu geringen Riemenspannung der Aktor 30 z.B. durch die Maschinensteuerung 32 betätigt und stellt die Riemenspannung auf einen vorgegebenen Wert z.B. auf eine vorgegebene Betriebsspannung ein.

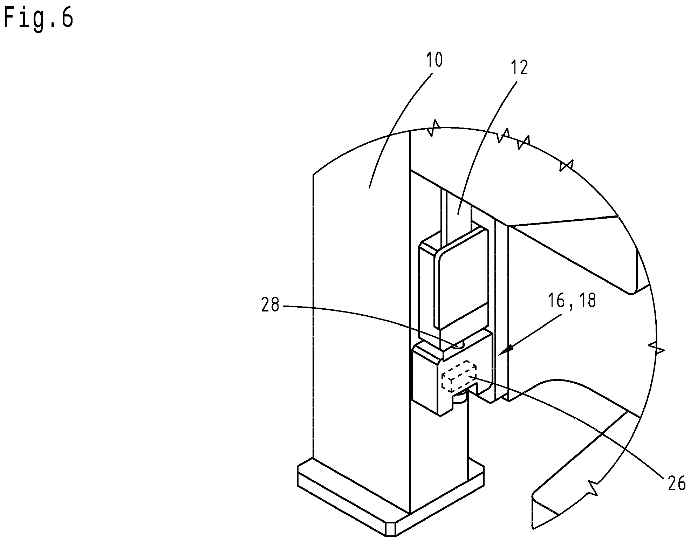

In einem weiteren Ausführungsbeispiel gemäß Fig. 6 weist die Sensoreinrichtung 16 bevorzugt wenigstens einen Zugkraftsensor auf. Der Zugkraftsensor ist im Ausführungsbeispiel gemäß Fig. 6 eine Spannschraube als Spannelement 28, die mit dem Messelement 26, z.B. einem Dehnungsmessstreifen bestückt ist, um die Zugkraft zu messen. Alternativ lassen sich am Markt erhältliche Zugkraftsensoren verwenden, wie sie dem Fachmann bekannt sind.

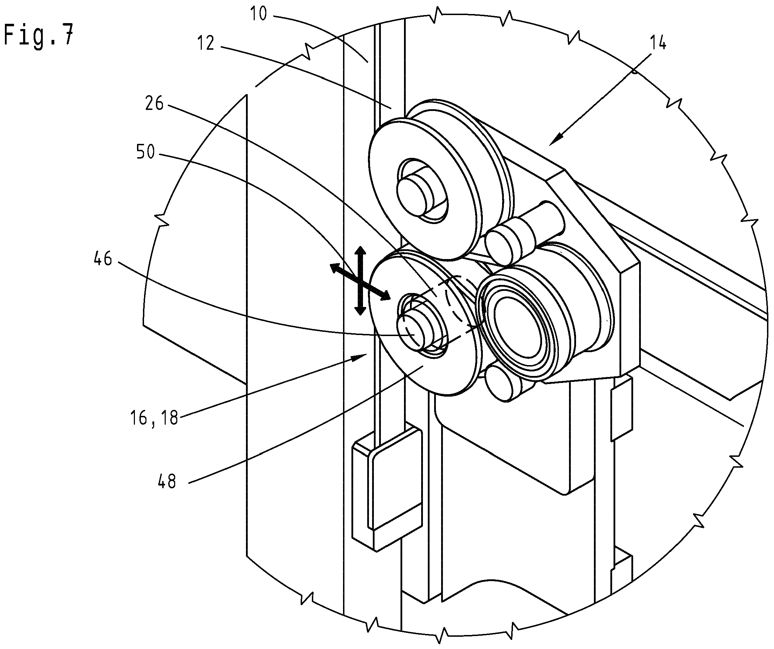

In einem weiteren Ausführungsbeispiel gemäß Fig. 7 weist die Sensoreinrichtung 16 bevorzugt wenigstens einen Biegesensor als Messelement 26 auf. Eine bewegbare und/oder bewegliche Rollenachse 46 und eine korrespondierende Rolle 48 können als Spannelement 28 in verschiedene Richtungen 50 bewegt bzw. an verschiedenen Stellen bzgl. der Rollenanordnung 14 angeordnet werden, wodurch der Riemen 12 je nach Anordnung der Rollenachse 46 bzw. der Rolle 48 mehr oder weniger gespannt wird. Erhöht sich beispielsweise im Betrieb die Riemenspannung, wird die Rolle 48 stärker gegen die Rollenachse 46 gedrückt, welche dadurch stärker gebogen wird. Der Biegesensor registriert diesen Unterschied der Biegung, woraus sich die Riemenspannung ableiten lässt. Je stärker die Biegung, desto höher ist die Riemenspannung.

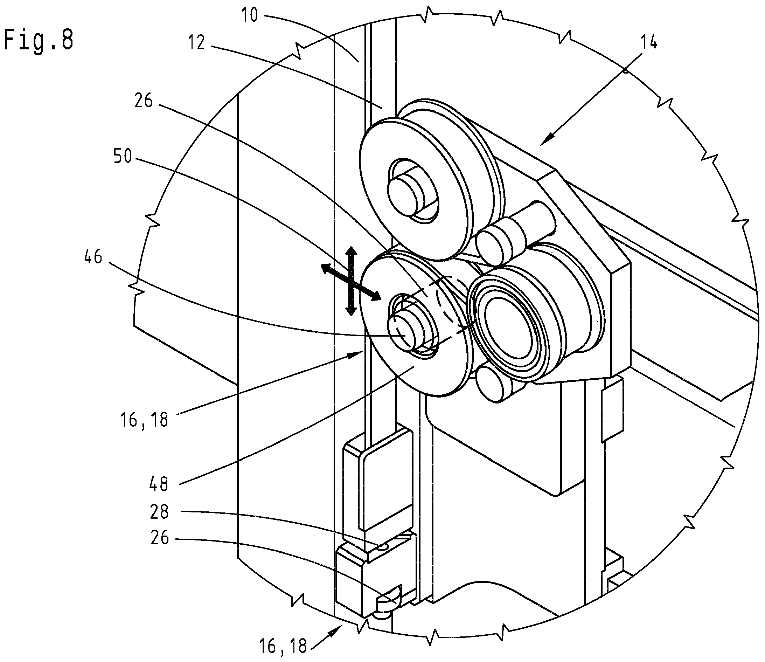

Prinzipiell denkbar ist auch, dass in einem weiteren bevorzugten Ausführungsbeispiel die Ausführungsbeispiele gemäß den Figuren 3 bis 7 miteinander kombiniert werden. In einem weiteren Ausführungsbeispiel gemäß Fig. 8 ist beispielsweise zusätzlich zu dem Drucksensor gemäß Fig. 4 noch ein Biegesensor gemäß Fig. 7 vorgesehen. Dadurch ergibt sich vorteilhaft eine redundante Messung der Riemenspannung, wodurch weiter vorteilhaft die Sicherheit erhöht wird. Prinzipiell sind aber auch andere Kombinationen möglich, z.B. ein Zugkraft- mit einem Biegesensor oder aber auch eine Kombination aus Druck-, Zugkraft und Biegesensor.

Das wenigstens eine Messelement 26 kann nicht nur als Unterlegscheibe, sondern z.B. auch als Feder, Dehnungsmessstreifen, Piezoelement, Drucksensor, Biegesensor oder Zugkraftsensor ausgestaltet sein. Ebenso kann das wenigstens eine Spannelement 28 nicht nur als Spannschraube, sondern z.B. auch als Federspanner, bewegbare und/oder bewegliche Rollenachse und korrespondierende Rolle oder Exzenter ausgestaltet sein, wobei das wenigstens eine Spannelement 28 die Riemenspanneinrichtung 18 ist. Über das Spannelement 28, welches bevorzugt mit dem Messelement 26 zusammenwirkt, kann die Riemenspannung eingestellt werden.

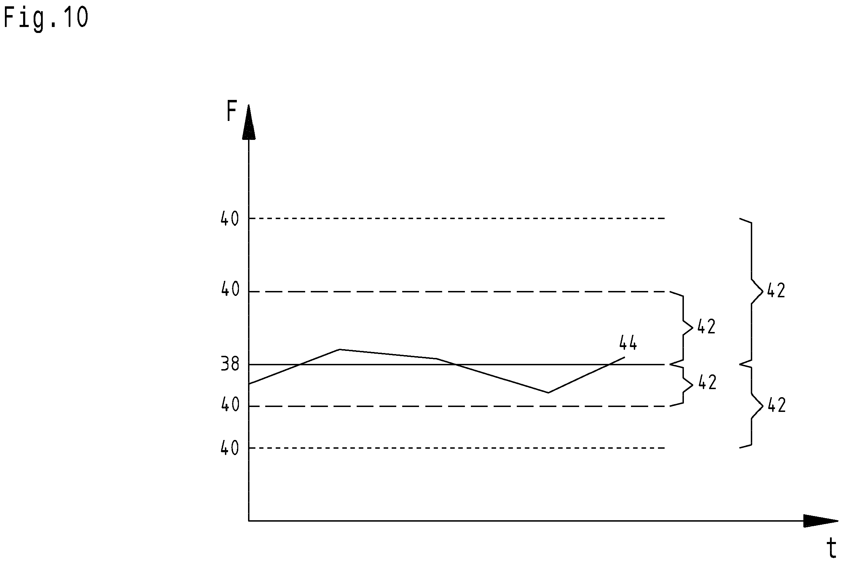

In einem bevorzugten Ausführungsbeispiel gemäß Fig. 10 ist die Maschinensteuerung 32 dazu eingerichtet, in Abhängigkeit der Riemenspannungsdaten 36 die Spritzgießmaschine und/oder deren Peripherie zu steuern. Beispielsweise wird zunächst der Riemen 12 bei der Einrichtung der Spritzgießanlage 100 und/oder deren Peripherie auf eine vorgegebene Betriebsspannung eingestellt und der Maschinensteuerung 32 dieser Wert 38 sowie wenigstens ein Toleranzwert 40 für wenigstens einen definierten Toleranzbereich 42 eingegeben. Selbstverständlich können mehrere beliebige Toleranzwerte 40 und Toleranzbereiche 42 eingegeben werden. Es ist auch möglich, dass der Toleranzbereich 42 aus der Eingabe des Werts 38 und des Toleranzwerts 40 bestimmt wird, beispielsweise von der Maschinensteuerung 32. Die Riemenspannung kann beispielsweise als eine Kurve 44 gemäß Fig. 10 dargestellt werden, z.B. auf der Maschinensteuerung 32. Liegen beispielsweise die von der Sensoreinrichtung 16 gemessenen Werte außerhalb des Toleranzbereichs 42, steuert die Maschinensteuerung 32 die Spritzgießanlage oder Spritzgießmaschine und/oder deren Peripherie so, dass z.B. wenigstens eine am Riemen 12 angreifende Kraft verringert oder die Spritzgießanlage oder Spritzgießmaschine und/oder deren Peripherie komplett gestoppt wird.

In den Ausführungsbeispielen der Fig. 4 - 6 weist die Sensoreinrichtung 16 eine Unterlegscheibe bzw. einen Dehnungsmessstreifen als Messelement 26 und jeweils eine Spannschraube als Spannelement 28 auf, wobei die Spannschraube die Riemenspanneinrichtung 18 ist. Mit Hilfe der Spannschraube wird die Spannung des Riemens 12 beispielweise bei der Einrichtung der Spritzgießanlage 100 und/oder deren Peripherie eingestellt. Beispielsweise kann die Spannschraube angezogen oder gelöst werden, wodurch der Riemen 12 entsprechend gespannt oder gelockert wird. Der so eingestellte Wert, mit dem die Riemenspannung gleichzeitig kalibriert wird, kann als Ausgangwert für die weiteren Messungen verwendet werden.

In den Ausführungsbeispielen gemäß Fig. 4 - 6 ist die Sensoreinrichtung 16 dazu eingerichtet, die Riemenspannung in Längsrichtung des Riemens 12 zu messen. Nimmt beispielsweise die Riemenspannung zu, so wirkt die zugehörige Kraft in Richtung des Riemens 12. Es ergibt sich vorteilhaft eine genaue Messung der Riemenspannung, da keine "schrägen" und/oder senkrechten Anteile der Kraft auftreten, die für eine genaue Messung der Riemenspannung herausgerechnet werden müssten.

In den Ausführungsbeispielen gemäß Fig. 3 - 6 ist der Riemen 12 als ein stehender und endlicher Riemen ausgeführt, wobei die Sensoreinrichtung 16 an einem Ende des Riemens 12 angeordnet ist. Dazu ist der Riemen an seinem einen Ende an der Spritzgießanlage 100 oder deren Peripherie befestigt.

Zur Einstellung und Überwachung einer Riemenspannung und/oder einer Riemensteifigkeit eines Riemens 12 einer Spritzgießanlage 100 zur Verarbeitung von Kunststoffen und anderer plastifizierbarer Massen und/oder deren Peripherie überwacht in einem bevorzugten Ausführungsbeispiel wenigstens eine Sensoreinrichtung 16 die Riemenspannung und/oder die Riemensteifigkeit des Riemens 12 und mit Hilfe wenigstens einer Riemenspanneinrichtung 18 wird die Riemenspannung und/oder die Riemensteifigkeit des Riemens 12 eingestellt. Um eine einfache, effektive und sichere Einstellung und Überwachung zu gewährleisten, wird als Riemenspanneinrichtung 18 wenigstens ein Teil der an einem Ende entlang der Längsrichtung des Riemens 12 angeordneten Sensoreinrichtung 16 und als Riemen 12 ein stehender und endlicher Riemen verwendet.

Gemäß Fig. 9 werden mit der Sensoreinrichtung 16 Riemenspannungsdaten 36 erfasst und an wenigstens eine Maschinensteuerung 32 übermittelt, wobei die Riemenspannungsdaten 36 durch die Maschinensteuerung 32 verarbeitet, aufgezeichnet und/oder über wenigstens einen Bildschirm 34, z.B. ein Touchscreen visualisiert werden. Beispielsweise können die Riemenspannungsdaten 36 in Echtzeit auf dem Bildschirm 34, z.B. als eine Kurve 44 gemäß Fig. 10 ausgegeben werden.

In einem weiteren bevorzugten Ausführungsbeispiel steuert z.B. die Maschinensteuerung 32 in Abhängigkeit der Riemenspannungsdaten 36 die Riemenspanneinrichtung 18, die Spritzgießanlage, die Spritzgießmaschine und/oder deren Peripherie. Beispielsweise kann die Maschinensteuerung 32 die Spritzgießanlage 100 und/oder deren Peripherie stoppen, sobald die Riemenspannung einen bestimmten Wert übersteigt, oder es kann ein Hinweis an einen Mitarbeiter ausgegeben werden, wenn die Riemenspannung zu niedrig ist.

In einem bevorzugten Ausführungsbeispiel gemäß Fig. 10 wird wenigstens ein Signal ausgegeben, sobald die Riemenspannung und/oder die Riemensteifigkeit wenigstens einen definierten Toleranzbereich 42 unter- oder überschreitet. Dazu ist in Fig. 10 z.B. die Kraft über der Zeit aufgetragen. Prinzipiell sind auch andere Auftragungen denkbar, z.B. Kraft über den zurückgelegten Weg, solange diese die Riemenspannung und/oder die Riemensteifigkeit abbilden oder damit verknüpft sind.

Beispielsweise wird beim Einrichten der Spritzgießanlage 100 und/oder deren Peripherie ein bestimmter Wert 38 für die Betriebsspannung des Riemens 12 z.B. der Maschinensteuerung 32 vorgegeben. Zusätzlich wird wenigstens ein Toleranzwert 40 vorgegeben, welcher wenigstens einen Toleranzbereich 42 um den bestimmten Wert 38 definiert. Über- oder unterschreiten die von der Sensoreinrichtung 16 gemessenen Werte für die Riemenspannung den Toleranzbereich 42 bzw. liegen sie außerhalb dessen, wird das Signal ausgegeben. Das Signal kann beispielsweise als akustisches, optisches, haptisches oder sonstiges Signal ausgegeben werden. In Fig. 10 sind mehrere Toleranzwerte 40 angegeben, welche mit dem Wert 38 mehrere Toleranzbereiche 42 definieren. Die Toleranzwerte 40 und die Toleranzbereiche 42 können unterschiedlich sein. Je nachdem, welcher Toleranzbereich 42 unter- oder überschritten wird, können unterschiedliche Eskalationsstufen vorgesehen sein, z.B. beginnend von einem Hinweis über eine Warnung hin zu einem Stopp der kompletten Maschine. Das Signal kann in einem bevorzugten Ausführungsbeispiel als eine Warnung auf der Maschinensteuerung 32 ausgegeben werden.

Prinzipiell ist es möglich, das Warnsignal als akustisches, optisches, haptisches und/oder sonstiges Signal auszugeben.

In einem weiteren Ausführungsbeispiel veranlasst z.B. die Maschinensteuerung 32 in Reaktion auf das Signal wenigstens eine der folgenden Maßnahmen, nämlich
a) eine Reduzierung wenigstens einer am Riemen 12 angreifenden Kraft,
b) ein Stopp der wenigstens einen am Riemen 12 angreifenden Kraft, der Spritzanlage 100 und/oder eines Peripheriegeräts 106.

Beispielsweise kann die Bewegung der Achse 10 während des Betriebs verringert oder gestoppt werden. Prinzipiell sind noch weitere Maßnahmen denkbar, beispielsweise dass ein Notruf abgesetzt und/oder ein Mitarbeiter verständigt wird.

Für eine erhöhte Sicherheit wird in einem weiteren Ausführungsbeispiel zur Ermittlung eines Arbeitspunktes des Riemens 12 die Belastung des Riemens 12 erfasst und integriert. Beispielsweise kann der Arbeitspunkt anhand der Riemenspannungsdaten 36 sowie anhand von Eigenschaften des Riemens, beispielsweise Länge, Material, Alter, Temperatur, Dicke und/oder Breite erfasst werden. Die Riemenspannungsdaten 36 werden über einen Zeitraum gemessen, wodurch sich die Belastung und der Arbeitspunkt ergeben.

In Abhängigkeit des Integrals wird in einem weiteren Ausführungsbeispiel eine Vorhersage der Restlebensdauer des Riemens 12 erstellt.

In einem weiteren bevorzugten Ausführungsbeispiel wird wenigstens ein Spannelement 28, z.B. eine Spannschraube der Sensoreinrichtung 16 als Riemenspanneinrichtung 18 zur Einstellung der Riemenspannung verwendet.

Für eine vorteilhaft genaue Messung der Riemenspannung wird in einem weiteren bevorzugten Ausführungsbeispiel gemäß Fig. 4 - 6 die Riemenspannung in Längsrichtung des Riemens gemessen. Dadurch ergeben sich keine "schrägen" und/oder senkrechten Anteile der gemessenen Riemenspannung, die zur genauen Bestimmung herausgerechnet werden müssten.

### Bezugszeichenliste

- 10: Achse
- 12: Riemen
- 14: Rollenanordnung
- 16: Sensoreinrichtung
- 18: Riemenspanneinrichtung
- 20: Ausschnitt
- 22: Werkzeugplatte
- 24: Antrieb
- 26: Messelement
- 28: Spannelement
- 30: Aktor
- 32: Maschinensteuerung
- 34: Bildschirm
- 36: Riemenspannungsdaten
- 38: Wert
- 40: Toleranzwert
- 42: Toleranzbereich
- 44: Kurve
- 46: Rollenachse
- 48: Rolle
- 50: Richtungen
- 100: Spritzgießanlage
- 102: Spritzgießmaschine
- 104: Spritzgießeinheit
- 106: Peripheriegerät
- F: Formschließeinheit

## Patentansprüche

1. Vorrichtung, eingerichtet zur Einstellung und Überwachung einer Riemenspannung und/oder einer Riemensteifigkeit eines Riemens (12) einer Spritzgießanlage (100) zur Verarbeitung von Kunststoffen und anderer plastifizierbarer Massen, mit wenigstens einer Riemenspanneinrichtung (18), welche dazu eingerichtet ist, die Riemenspannung und/oder die Riemensteifigkeit des Riemens (12) einzustellen,
wobei die Spritzgießanlage (100) umfasst:
eine Formschließeinheit (F) mit einem zwischen Werkzeugplatten (22) aufgenommenem Spritzgießwerkzeug mit einem Formhohlraum, der dazu eingerichtet ist, ein Spritzgussteil zu formen,
**dadurch gekennzeichnet,**
**dass** wenigstens eine Sensoreinrichtung (16) vorgesehen ist, welche dazu eingerichtet ist, die Riemenspannung und/oder die Riemensteifigkeit des Riemens (12) zu überwachen,
**dass** die Riemenspanneinrichtung (18) wenigstens ein Teil der Sensoreinrichtung (16) ist und der Riemen (12) als stehender und endlicher Riemen ausgeführt ist und
**dass** die Sensoreinrichtung (16) an einem Ende entlang der Längsrichtung des Riemens (12) angeordnet ist.

2. Vorrichtung nach Anspruch 1, **dadurch gekennzeichnet, dass** eine über den Riemen (12) angetriebene, schwerkraftbelastete Achse (10) vorgesehen ist, die als Tauchachse dazu eingerichtet ist, das Spritzgussteil aus dem Spritzgießwerkzeug zu entnehmen.

3. Vorrichtung nach Anspruch 1 oder 2, **dadurch gekennzeichnet, dass** die Sensoreinrichtung (16) an einem stehenden Ende des Riemens (12) angeordnet ist.

4. Vorrichtung nach einem der vorhergehenden Ansprüche, **dadurch gekennzeichnet, dass** die Spritzgießanlage (100) wenigstens eine Spritzgießmaschine (102) und wenigstens ein zugehöriges Peripheriegerät (106) umfasst, wobei wenigstens eines der Elemente umfassend den Riemen (12), die Achse (10), die Riemenspanneinrichtung (18) und/oder die Sensoreinrichtung (16) ein Teil des Peripheriegeräts (106) ist.

5. Vorrichtung nach einem der vorhergehenden Ansprüche, **dadurch gekennzeichnet, dass** die Sensoreinrichtung (16) dazu eingerichtet ist, Riemenspannungsdaten (36) zu erfassen und an wenigstens eine Maschinensteuerung (32) zu übermitteln, welche dazu eingerichtet ist, die Riemenspannungsdaten (36) zu verarbeiten, aufzuzeichnen und/oder über wenigstens einen Bildschirm (34) zu visualisieren.

6. Vorrichtung nach einem der vorhergehenden Ansprüche, **dadurch gekennzeichnet, dass** die Sensoreinrichtung (16) wenigstens einen Druck-, Biege- und/oder Zugkraftsensor aufweist und vorzugsweise dazu eingerichtet ist, die Riemenspannung in Längsrichtung oder annähernd in Längsrichtung des Riemens (12) zu messen.

7. Vorrichtung nach Anspruch 5 oder 6, **dadurch gekennzeichnet, dass** die wenigstens eine Maschinensteuerung (32) dazu eingerichtet ist, in Abhängigkeit der Riemenspannungsdaten (36) die Riemenspanneinrichtung (18) und/oder die Spritzgießanlage (100) zu steuern.

8. Vorrichtung nach einem der vorhergehenden Ansprüche, **dadurch gekennzeichnet, dass** die Sensoreinrichtung (16) wenigstens ein Messelement (26) und wenigstens ein Spannelement (28) aufweist, wobei das wenigstens eine Spannelement (28) die Riemenspanneinrichtung (18) ist.

9. Verfahren zur Einstellung und Überwachung einer Riemenspannung und/oder einer Riemensteifigkeit eines Riemens (12) einer Spritzgießanlage (100) zur Verarbeitung von Kunststoffen und anderer plastifizierbarer Massen, mit einer Formschließeinheit (F) mit einem zwischen Werkzeugplatten (22) aufgenommenem Spritzgießwerkzeug, in dessen Formhohlraum ein Spritzgussteil geformt wird,
wobei mit wenigstens einer Riemenspanneinrichtung (18) die Riemenspannung und/oder die Riemensteifigkeit des Riemens (12) eingestellt wird,
**dadurch gekennzeichnet,**
**dass** mit wenigstens einer Sensoreinrichtung (16) die Riemenspannung und/oder die Riemensteifigkeit des Riemens (12) überwacht wird,
**dass** als Riemenspanneinrichtung (18) wenigstens ein Teil der an einem Ende entlang der Längsrichtung des Riemens (12) angeordneten Sensoreinrichtung (16) und als Riemen (12) ein stehender und endlicher Riemen verwendet wird.

10. Verfahren nach Anspruch 9, **dadurch gekennzeichnet, dass** eine über den stehend und endlich ausgeführten Riemen (12) angetriebene, schwerkraftbelastete Achse (10) als Tauchachse das Spritzgussteil aus dem Spritzgießwerkzeug entnimmt.

11. Verfahren nach Anspruch 9 oder 10, **dadurch gekennzeichnet, dass** als Spritzgießanlage (100) wenigstens eine Spritzgießmaschine (102) und wenigstens ein zugehöriges Peripheriegerät (106) verwendet wird, wobei wenigstens eines der Elemente umfassend den Riemen (12), die Achse (10), die Riemenspanneinrichtung (18) und/oder die Sensoreinrichtung (16) als ein Teil des Peripheriegeräts (106) verwendet wird.

12. Verfahren nach einem der Ansprüche 9 bis 11, **dadurch gekennzeichnet, dass** mit der Sensoreinrichtung (16) Riemenspannungsdaten (36) erfasst und an wenigstens eine Maschinensteuerung (32) übermittelt werden, wobei die Riemenspannungsdaten (36) durch die Maschinensteuerung (32) verarbeitet, aufgezeichnet und/oder über wenigstens einen Bildschirm (34) visualisiert werden, wobei vorzugweise in Abhängigkeit der Riemenspannungsdaten (36) vorzugsweise die Riemenspanneinrichtung (18) und/oder die Spritzgießanlage (100) gesteuert wird.

13. Verfahren nach einem der Ansprüche 9 bis 12, **dadurch gekennzeichnet, dass** wenigstens ein Signal ausgegeben wird, sobald die Riemenspannung und/oder die Riemensteifigkeit wenigstens einen Toleranzbereich (42) unter- oder überschreitet,
wobei in Reaktion auf das Signal vorzugsweise wenigstens eine der folgenden Maßnahmen veranlasst wird:
a) eine Reduzierung wenigstens einer am Riemen (12) angreifenden Kraft,
b) ein Stopp der wenigstens einen am Riemen (12) angreifenden Kraft der Spritzgießanlage (100) und/oder eines Peripheriegeräts (106).

14. Verfahren nach einem der Ansprüche 9 bis 13, **dadurch gekennzeichnet, dass** zur Ermittlung eines Arbeitspunktes des Riemens (12) die Belastung des Riemens (12) erfasst und über die Zeit integriert wird, wobei in Abhängigkeit des Integrals vorzugsweise wenigstens eine Vorhersage der Restlebensdauer des Riemens (12) erstellt wird.

15. Verfahren nach einem der Ansprüche 9 bis 14, **dadurch gekennzeichnet, dass** wenigstens ein Spannelement (28) der Sensoreinrichtung (16) als Riemenspanneinrichtung (18) zur Einstellung der Riemenspannung verwendet wird.

16. Verfahren nach einem der Ansprüche 9 bis 15, **dadurch gekennzeichnet, dass** die Riemenspannung in Längsrichtung oder annähernd in Längsrichtung des Riemens (12) gemessen wird.

## Claims

1. An apparatus, configured to adjust and monitor a belt tension and/or a belt stiffness of a belt (12) of an injection-moulding system (100) for processing plastics and other plasticizable masses, the apparatus comprising
at least one belt-tensioning device (18), which is configured to adjust the belt tension and/or the belt stiffness of the belt (12),
the injection-moulding system (100) comprising:
a mould-closing unit (F) with an injection mould which is received between mould plates (22) and which comprises a mould cavity which is configured to form an injection-moulded part,
**characterised in that**
at least one sensor device (16) is provided, which is configured to monitor the belt tension and/or the belt stiffness of the belt (12),
**in that** the belt-tensioning device (18) is at least part of the sensor device (16) and the belt (12) is embodied as a fixedly-mounted and finite belt, and
**in that** the sensor device (16) is arranged at one end in the longitudinal direction of the belt (12).

2. Apparatus in accordance with claim 1, **characterised in that** there is provided a gravity-loaded shaft (10) which is driven by means of the belt (12) and is configured as a vertical-entry shaft to remove the injection-moulded part from the injection mould.

3. Apparatus in accordance with claim 1 or 2, **characterised in that** the sensor device (16) is arranged at a vertical end of the belt (12).

4. Apparatus in accordance with one of the preceding claims, **characterised in that** the injection-moulding system (100) comprises at least one injection-moulding machine (102) and at least one associated peripheral device (106), at least one of the elements comprising the belt (12), the shaft (10), the belt-tensioning device (18) and/or the sensor device (16) being part of the peripheral device (106).

5. Apparatus in accordance with one of the preceding claims, **characterised in that** the sensor device (16) is configured to capture belt tension data (36) and to transmit said data to at least one machine controller (32), which is configured to process the belt tension data (36), record it and/or visualise it by means of at least one screen (34).

6. Apparatus in accordance with one of the preceding claims, **characterised in that** the sensor device (16) comprises at least one pressure sensor, bend sensor and/or tensile force sensor and is preferably configured to measure the belt tension in the longitudinal direction or approximately in the longitudinal direction of the belt (12).

7. Apparatus in accordance with claim 5 or 6, **characterised in that** the at least one machine controller (32) is configured to control the belt-tensioning device (18) and/or the injection-moulding system (100) in dependence on the belt tension data (36).

8. Apparatus in accordance with one of the preceding claims, **characterised in that** the sensor device (16) comprises at least one measuring element (26) and at least one tensioning element (28), the at least one tensioning element (28) being the belt-tensioning device (18).

9. A method for adjusting and monitoring a belt tension and/or a belt stiffness of a belt (12) of an injection-moulding system (100) for processing plastics and other plasticizable masses, comprising a mould-closing unit (F) with an injection mould, which is received between mould plates (22) and in the mould cavity of which an injection-moulded part is formed,
the belt tension and/or the belt stiffness of the belt (12) being adjusted using at least one belt-tensioning device (18),
**characterised in that**
the belt tension and/or the belt stiffness of the belt (12) is monitored by at least one sensor device (16),
**in that** at least a part of the sensor device (16) arranged at an end in the longitudinal direction of the belt (12) is used as belt-tensioning device (18) and a fixedly-mounted and finite belt is used as belt (12).

10. Method in accordance with claim 9, **characterised in that** a gravity-loaded shaft (10), which is driven by means of the fixedly-mounted and finite belt (12), as vertical-entry shaft, removes the injection-moulded part from the injection mould.

11. Method in accordance with claim 9 or 10, **characterised in that** at least one injection-moulding machine (102) and at least one associated peripheral device (106) is used as injection-moulding system (100), with at least one of the elements comprising the belt (12), the shaft (10), the belt-tensioning device (18) and/or the sensor device (16) being used as a part of the peripheral device (106).

12. Method in accordance with one of the claims 9 to 11, **characterised in that** belt tension data (36) are captured using the sensor device (16) and are transmitted to at least one machine controller (32), wherein, by means of the machine controller (32), the belt tension data (36) are processed, recorded and/or visualised by means of at least one screen (34), the belt-tensioning device (18) and/or the injection-moulding system (100) preferably being controlled preferably in dependence on the belt tension data (36).

13. Method in accordance with one of the claims 9 to 12, **characterised in that** at least one signal is output as soon as the belt tension and/or the belt stiffness drops below or exceeds at least one tolerance range (42),
wherein in response to the signal preferably at least one of the following measures is prompted:
a) a reduction of at least one force acting on the belt (12),
b) a stoppage of the at least one force acting on the belt (12), of the injection-moulding machine (100) and/or of a peripheral device (106).

14. Method in accordance with one of the claims 9 to 13, **characterised in that** the loading of the belt (12) is detected and integrated over time to determine a working point of the belt (12), preferably at least one prediction of the remaining service life of the belt (12) being created in dependence on the integral.

15. Method in accordance with one of the claims 9 to 14, **characterised in that** at least one tensioning element (28) of the sensor device (16) is used as belt-tensioning device (18) to adjust the belt tension.

16. Method in accordance with one of the claims 9 to 15, **characterised in that** the belt tension is measured in the longitudinal direction or approximately in the longitudinal direction of the belt (12).

## Revendications

1. Appareil conçu pour le réglage et la surveillance de la tension et/ou de la rigidité d'une courroie (12) d'une installation de moulage par injection (100) pour la fabrication de matières plastiques et d'autres masses plastifiables, comportant au moins un dispositif pour tendre une courroie (18) qui est conçu pour régler la tension et/ou la rigidité de la courroie (12), cette installation de moulage par injection (100) comprenant :
une unité de fermeture de moule (F) avec un outil de moulage par injection logé entre deux plaques d'outil (22) avec une cavité de moulage qui est conçue pour mouler une pièce par injection,
**caractérisé**
**en ce qu'**il est prévu un dispositif de détection (16) qui est conçu pour surveiller la tension et/ou la rigidité de la courroie (12),
**en ce que** le dispositif pour tendre la courroie (18) est une partie du dispositif de détection (16) et la courroie (12) est réalisée sous forme de courroie verticale et finie et
**en ce que** le dispositif de détection (16) est disposé à une extrémité suivant la direction longitudinale de la courroie (12).

2. Dispositif selon la revendication 1, **caractérisé en ce qu'**un axe (10) entraîné par la courroie (12) et soumis à la gravité est prévu et conçu comme un axe plongeant afin de retirer la pièce moulée par injection de l'outil de moulage par injection.

3. Dispositif selon la revendication 1 ou 2, **caractérisé en ce que** le dispositif de détection (16) est disposé à une extrémité verticale (2) de la courroie (12).

4. Dispositif selon l'une des revendications précédentes, **caractérisé en ce que** l'installation de moulage par injection (100) comprend au moins une machine de moulage par injection (102) et au moins un appareil périphérique (106) appartenant à celle-ci, au moins l'un des éléments parmi la courroie (12), l'axe (10), le dispositif pour tendre la courroie (18) et/ou le dispositif de détection (16) faisant partie de l'appareil périphérique (106).

5. Dispositif selon l'une des revendications précédentes, **caractérisé en ce que** le dispositif de détection (16) est conçu pour mesurer les données de tension de la courroie (36) et les transmettre à au moins un dispositif de commande de la machine (32), celui-ci étant conçu pour exploiter les données de tension de la courroie (36), les enregistrer et/ou les visualiser sur au moins un écran (34).

6. Dispositif selon l'une des revendications précédentes, **caractérisé en ce que** le dispositif de détection (16) présente au moins un détecteur de pression, un capteur de courbure et/ou un détecteur de force de traction et est de préférence conçu pour mesurer la tension de la courroie dans la direction longitudinale ou approximativement dans la direction longitudinale de la courroie (12).

7. Dispositif selon la revendication 5 ou 6, **caractérisé en ce que** le ou les dispositif(s) de commande de la machine (32) est/sont conçu(s) pour commander le dispositif pour tendre la courroie (18) et/ou l'installation de moulage par injection (100) en fonction des données de tension de la courroie (36).

8. Dispositif selon l'une des revendications précédentes, **caractérisé en ce que** le dispositif de détection (16) présente au moins un élément de mesure (26) et au moins un élément de tension (28), ce ou ces dernier(s) étant le dispositif pour tendre la corroie (18).

9. Procédé pour le réglage et la surveillance de la tension et/ou de la rigidité d'une courroie (12) d'une installation de moulage par injection (100) pour la fabrication de matières plastiques et d'autres masses plastifiables, comportant une unité de fermeture de moule (F) avec un outil de moulage par injection logé entre des plaques à outil (22) et dans l'espace de moulage duquel une pièce est moulée par injection,
dans lequel la tension et/ou la rigidité de la courroie (12) est/sont réglée(s) avec au moins dispositif pour tendre la courroie (18),
**caractérisé en ce que** la tension et/ou la rigidité de la courroie (12) est/sont surveillée(s) avec au moins un dispositif de détection (16),
**en ce qu'**on utilise comme dispositif pour tendre la courroie (18) au moins une partie du dispositif de détection (16) disposé à une extrémité suivant la direction longitudinale de la courroie (12) et en tant que courroie (12) une courroie verticale et finie.

10. Procédé selon la revendication 9, **caractérisé en ce qu'**un axe (10) soumis à la gravité et entraîné par une courroie réalisée sous forme verticale et finie (12) retire en tant qu'axe plongeant la pièce moulée par injection de l'outil de moulage par injection.

11. Procédé selon la revendication 9 ou 10, **caractérisé en ce qu'**on utilise en tant qu'installation de moulage par injection (100) au moins une machine de moulage par injection (102) et au moins un appareil périphérique (106) appartement à celle-ci, l'un au moins des éléments parmi la courroie (12), l'axe (10), le dispositif pour tendre la courroie (18) et/ou le dispositif de détection (16) étant utilisé en tant que partie de l'appareil périphérique (106).

12. Procédé selon l'une des revendications 9 à 11, **caractérisé en ce que** des données de tension de la courroie (36) sont mesurées avec le dispositif de détection (16) et sont transmises à au moins un dispositif de commande de machine (32), les données de tension de la courroie (36) étant exploitées par le dispositif de commande de machine (32), enregistrées et/ou visualisées sur au moins un écran (34), de préférence le dispositif pour tendre la courroie (18) et/ou l'installation de moulage par injection (100) étant commandé(s) de préférence en fonction des données de tension de la courroie (36).

13. Procédé selon l'une des revendication 9 à 12, **caractérisé en ce qu'**au moins un signal est émis dès que la tension de la courroie et/ou la rigidité de la courroie se situe en dessous ou au-dessus d'un intervalle de tolérance (42), en réaction au signal, de préférence l'une au moins des mesures suivantes étant prise :
a) une réduction d'au moins une force s'exerçant sur la courroie (12),
b) un arrêt de la ou des force(s) de l'installation de moulage par injection (100) s'exerçant sur la courroie (12) et/ou de l'appareil périphérique (106).

14. Procédé selon l'une des revendications 9 à 13, **caractérisé en ce que** pour la mesure d'un point de fonctionnement de la courroie (12), la charge de la courroie (12) est mesurée et est intégrée dans le temps, de préférence au moins une prévision de la durée de vie restante de la courroie (12) étant réalisée en fonction de l'intégrale.

15. Procédé selon l'une des revendications 9 à 14, **caractérisé en ce qu'**au moins un élément de tension (28) du dispositif de détection (16) est utilisé comme dispositif pour tendre la courroie (18) pour le réglage de la tension de la courroie.

16. Procédé selon l'une des revendications 9 à 15, **caractérisé en ce que** la tension de la courroie est mesurée dans la direction longitudinale ou approximativement dans la direction longitudinale de la courroie (12).
